# EUROPEAN PATENT APPLICATION

(11) **EP 4 084 254 A1**
(43) Date of publication of application: **02.11.2022**
(21) Application number: 21170617.1
(22) Date of filing: 27.04.2021
(51) Int. Cl.: H02J 3/00, G05B 17/02

(54) **METHOD AND APPARATUS FOR COMPUTER-IMPLEMENTED CONTROLLING A POWER PLANT**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention relates to a method for computer-implemented controlling a power plant (10) being connected to an electrical grid (60), the power plant (10) comprising at least one power plant asset (11-13); a power plant control system (20) for monitoring and controlling the at least one power plant asset (11-13) by respective control commands (CC) having a respective first setpoint (SP1), the power plant control system (20) comprising a monitoring unit (21) and a real-time control unit (22); and a power plant emulating system (30, 40, 50, 70) being adapted to emulate future control commands (FCC) for the power plant assets (11-13) at a future time point based on historical and/or forecasted conditions of the power plant (10) and/or external data, the emulated future control commands (FCC) having a respective second setpoint (SP2). The following steps are performed by the real-time control unit (22) during the operation of the power plant (10) :
a) obtaining actual operational data (SD, MD) from the monitoring unit (21) at a present time point (T_{N});
b) determining a respective first setpoint (SP1) for the power plant assets (11-13) from the actual operational data (MD) at the present time point (T_{N});
c) obtaining the emulated second setpoints (SP2) for the power plant assets (11-13) at the present time point (T_{N}), where the second setpoints (SP2) have been emulated in the past for the present time point (T_{N});
d) determining a respective actual setpoint (ASP) for the power plant assets (11-13) from the associated first setpoints (SP1) and second setpoints (SP2).

## Description

The present invention relates to a method and an apparatus for computer-implemented controlling a power plant.

Power plants comprising a plurality of energy producers and/or a plurality of energy consumers are controlled in order to meet predetermined conditions, signals or setpoints given to them by external sources. For this reason, the power plant comprises a power plant control system for monitoring and controlling the power plant assets by respective control commands. Conventionally, the power plant control system comprises a monitoring unit and a real-time control unit. The monitoring unit is adapted to receive, in given time intervals, during the operation of the power plant operational data, comprising status data and/or measurement data, from the power plant assets. The operational data are provided to the real-time control unit to determine the control commands in reaction to the received status data and/or measurement data. The control commands are stored with the operational data in a database for further investigation.

External sources providing information to be processed when determining the control commands may be a Transmission System Operator (TSO) providing control signals according to measured data or a weather station providing information about wind speed, wind direction and so on. In order to meet the predetermined conditions, asset owner requirements, such as information about maintenance, downtime, maximum output and so on, and pricing information can be considered as well.

Processing a selection of the aforementioned signals as input information to calculate control commands is called "reactive" control. Reactive control has the disadvantage that upcoming events in the future, such as wear, maintenance, changing weather situations, and so on cannot be considered in the control strategy.

It is an object of the present invention to provide an easy method for improved controlling power plant.

This object is solved by the independent claims. Preferred embodiments of the invention are defined in the dependent claims.

The invention provides a method for computer-implemented controlling a power plant being connected to an electrical grid. The power plant comprises at least one power plant asset.
Each of the power plant assets is an energy producer, such as a wind turbine, a gas turbine or a PV-module, and/or an energy consumer. Batteries or any other energy storages can be regarded as energy producers and consumers, depending on the fact whether energy is flowing into or out of it.

Furthermore, the power plant comprises a power plant control system for monitoring and controlling the at least one power plant asset by respective control commands. Each control command has a respective first setpoint. The power plant control system comprises a monitoring unit and a real-time control unit. The monitoring unit is adapted to receive, in given time intervals, during the operation of the power plant, operational data, such as status data and/or sensor measurement data, from the at least one power plant asset. The monitoring unit is further adapted to provide the operational data to the real-time control unit.

A power plant emulating system of the power plant is adapted to emulate future control commands for each of the at least one power plant assets at a future time point based on historical and/or forecasted conditions of the power plant and/or external data. The emulated future control commands have a respective second setpoint. External data are data (signals or setpoints) from sources outside the power plant to meet predetermined conditions. This external data may be provided, for example, from a Transmission System Operator (TSO) or a weather station providing information about wind speed, wind direction and so on. External data may also be asset owner requirements, such as information about maintenance, downtime, maximum output and so on, and pricing information.

The following steps are performed by the real-time control unit at each time point of one or more time points during the operation of the power plant:
In a first step a), actual status data and/or measurement data from the monitoring unit at a present time point are obtained. In the following, the terms "status data" and "measurement data" refer to digital data. The term "obtaining status data and/or measurement data" means that the status data and/or the measurement data are received by the real-time control unit implementing the method of the invention. The status data and/or measurement data constitute operational data of the power plant assets of the power plant. They are acquired in real-time during the operation of the power plant at the present time point from respective sensors of the power plant and/or external sensors and/or retrieved from a database.

In a second step b), respective first setpoints for each of the at least one power plant assets from the actual status data and/or measurement data at the present time point are determined.

In a third step c), the emulated second setpoints for each of the at least one power plant assets at the present time point are obtained, where the second setpoints have been emulated in the past for the present time point. In the following, the term "obtaining second setpoints" means that the second setpoints are received by the real-time control unit implementing the method of the invention.

In a fourth step d), respective actual setpoints for each of the at least one power plant assets are determined from the associated first setpoints and second setpoints.

The method of the invention provides an easy and straightforward method for controlling a power plant based on real-time operational data and predicted operational data where the prediction has been made in the past. To do so, second setpoints are emulated for each of the at least one power plant assets for the present time point, where the second setpoints have been emulated in the past for the present time point.

According to a preferred embodiment, the actual setpoint of the respective power plant asset either corresponds to its first setpoint or its second setpoint, depending on a result of a verification process considering at least one operational constraint. Operational constraints might be, for example, a state of charge of an energy storage which is or would get too low to be controlled with a second setpoint.

According to a further preferred embodiment, the actual setpoint of a respective power plant asset corresponds to an adapted first setpoint, wherein the adaption is based on the second setpoint. In other words, the first setpoint may be adapted based on the value of the second setpoint and/or the future control commands leading to the second setpoint.

According to a further preferred embodiment, the power plant emulating system comprises a training system, a forecasting system, a power plant modelling system, and an optimization system. The power plant modelling system contains a model for each power plant asset, where each of the models is a direct digital representation of a respective power plant asset and determines at each of the time points at least one parameter reflecting the actual current state of the at least one power plant asset. The models for each power plant asset represent so called digital twins of the respective power plant assets. The models of the power plant modelling system are parameterized by the training system to reflect at each of the time points the actual current state of the at least one power plant asset. The training system is monitoring the actual operation of the power plant assets, thereby gathering information about, for example, degradation of one of the at least one power plant assets. The degradation of one or more of the at least one power plant assets can be provided to the power plant modelling system, which in turn, reflects that actual current state of the degraded power plant asset(s).

According to a further preferred embodiment, the actual current state comprises at least one of the following parameters: power production of each power plant asset being an energy producer; state of each power plant asset; state of charge of each power plant asset being an energy storage.

According to a further preferred embodiment, the training system determines the models for each power plant asset by processing current and historical status data and/or measurement data received from the monitoring unit by a trained data driven model, where the current and historical status data and/or measurement data are fed as a digital input to the trained data driven model and the trained data driven model provides the models (digital twins) for each power plant asset as a digital output. This model is trained by training data comprising a plurality of status data and/or measurement data. Any known data driven model being learnt by machine learning may be used in the method according to the invention.

According to a further preferred embodiment, the power plant modelling system receives forecast timeseries data from the forecasting system relating to at least one power production influencing parameters. Power production influencing parameters may be, for example, weather data, energy prices or demand forecasts.

According to a further preferred embodiment, the optimization system determines the future control commands and/or the second setpoints by processing the actual current state of the models of the at least one power plant asset received from the power plant modelling system and at least one objective to be met at the present time point, which is, at the time of processing a future time point ahead of the present.

According to a further preferred embodiment, the at least one objective to be met comprises at least one of the following objectives: minimum leveraged costs of produced energy; maximum availability of the power plant; maximum revenue of the power plant; grid code compliance.

According to a further preferred embodiment, the second setpoints are stored in a database upon emulation and obtained from the real-time control unit from the database. Alternatively or additionally the emulated future control commands are stored in a database upon emulation, wherein the second setpoints are determined from the emulated future control commands at the time of retrieval, either by the real-time control unit or the power plant emulating system.

According to a further preferred embodiment, the second setpoints are determined from respective emulated status data and/or emulated measurement data by the optimization system which is adapted to create an optimal control strategy for the power plant based on a simulation model and at least one objective of the optimization.

Besides the above method, the invention refers to an apparatus for computer-implemented controlling a power plant being connected to an electrical grid, where the apparatus is configured to perform the method according to the invention or one or more preferred embodiments according to the invention.

In addition, the invention refers to a power plant comprising at least one power plant asset, wherein the power plant comprises an apparatus according to the invention.

Moreover, the invention refers to a computer program product with a program code, which is stored on a non-transitory machine readable carrier, adapted for carrying out the method according to the invention or one or more preferred embodiments thereof when the program code is executed on a computer.

Furthermore, the invention refers to a computer program with a program code for carrying out the method according to the invention or one or more preferred embodiments thereof when the program code is executed on a computer.

An embodiment of the invention will now be described in detail with respect to the accompanying drawing.

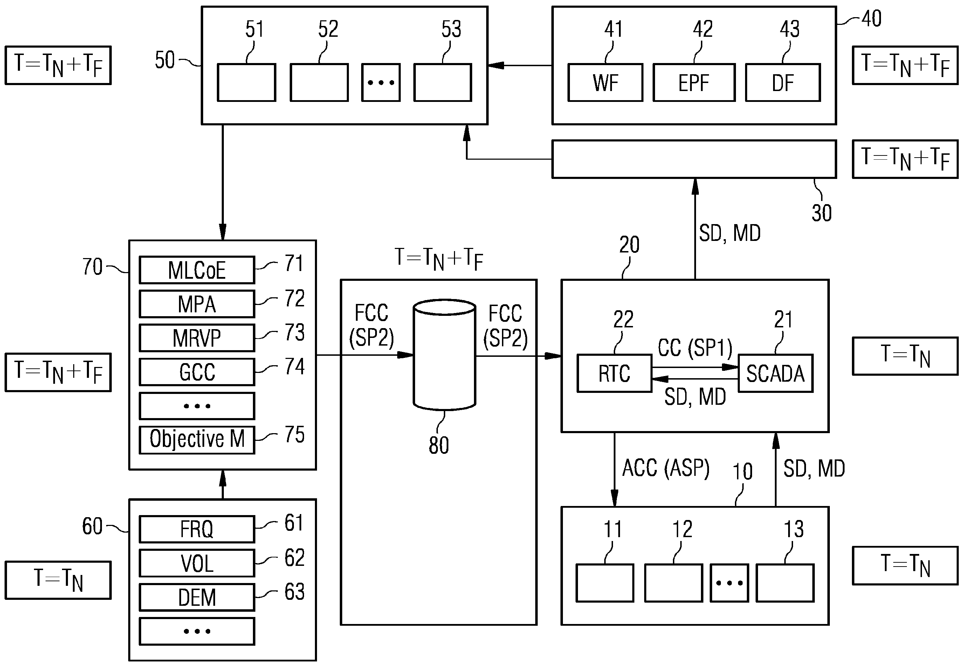

- Figure 1: shows a schematic illustration of an apparatus for computer-implemented controlling a power plant being connected to an electrical grid.

The method as described in the following provides an easy and straightforward method for controlling a power plant based on real-time operational data and predicted operational data. It makes use from a conventional power plant 10 comprising a plurality of power plant assets 11, 12, 13 and a power plant control system 20 for monitoring and controlling the power plant assets 11, 12, 13 of the power plant 10.

The power plant assets 11, 12, 13 may be an energy producer, an energy consumer or both, an energy producer and consumer. For example, the power plant assets 11, 12, 13 may be a wind turbine, a gas turbine, a PV-module (as energy producer), an electrical generator (as energy consumer), or a battery or any other energy storage (as a combined energy producer and consumer).

The power plant assets 11, 12, 13, whose number is arbitrary (in general: N), are monitored and controlled by the power plant control system 20. The power plant control system 20 comprises a monitoring unit 21 and a real-time control unit 22. The monitoring unit 21 is adapted to receive, in given time intervals, during the operation of the power plant 10 operational data from the power plant assets 11, 12, 13. Operational data comprise status data and/the measurement data from a respective power plant asset 11, 12, 13 and/or sensors on-site the power plant 10 (such as wind direction and wind speed). However, the operational data may comprise any other data than the status data and the measurement data. The operational data are provided to the real-time control unit 22 which determines, for each of the power plant assets 11, 12, 13, control commands CC having a respective first setpoint SP1.

In addition, controlling of the power plant assets 11, 12, 13 may be dependent from other external information in order to meet predetermined conditions, signals or setpoints which are based on external sources. Such external information may be received from a Transmission System Operator (TSO) providing control signals according to measured data from than electrical grid 60. Furthermore, asset owner requirements, such as information about maintenance, downtime, maximum or minimum output and so on, as well as pricing information can influence the control commands CC and their first setpoints SP1.

The control commands CC and their first setpoints SP1 which are determined from the received operational data are stored together with the operational data in a not shown database for further investigation in the future. Therefore, the control commands CC determined from the real-time control unit 22 are provided to the monitoring unit 21. As mentioned before, the control commands CC comprise a respective first setpoint SP1 for each of the power plant assets 11, 12, 13. Conventionally, the setpoints SP1 are transmitted to the respective power plant assets 11, 12, 13 to control them in a manner as determined by the power plant control system 20.

Controlling the power plant assets 11, 12, 13 as described above is called reactive control which has the disadvantage that upcoming events such as changing weather situations, wear, maintenance, and so on, cannot be considered when determining the control commands CC and first setpoints SP1, respectively.

The further steps and components enable improved computer-implemented controlling of the power plant 10. To do so, a power plant emulating system is adapted to emulate future control commands FCC for each of the power plant assets 11, 12, 13 at a future time point based on historical and/or forecasted conditions of the power plant 10 and/or external data.

The power plant emulating system comprises a training system 30, a forecasting system 40, a power plant modelling system 50, and an optimization system 70.

The modelling system 50 contains models 51, 52, 53 for each of the power plant assets 11, 12, 13. Each of the models 51, 52, 53 is a direct digital representation of a respective power plant assets 11, 12, 13. Hence, the number of models 51, 52, 53 corresponds to the number of power plant assets 11, 12, 13. The power plant modelling system 50 determines at each time point of one or more time points at least one parameter reflecting the actual current state of the power plant assets 11, 12, 13. The models 51, 52, 53 for each power plant asset 11, 12, 13 therefore represent so called digital twins of the respective power plant asset 11, 12, 13. The object of the modelling system 50 is to reflect the maximum possible accuracy with regard to the layout, assets, state and behavior of the power plant 10.

The power plant modelling system 50 and its models 51, 52, 53 are parameterized by the training system 30 to reflect at each of the time points the actual current state of the power plant assets 11, 12, 13. The actual current states may comprise the power production of a power plant asset, the state of charge of the power plant asset or the state of each of the power plant assets. However, it is to be understood, that the actual current states may contain further parameters.

The training system 30 determines the models 51, 52, 53 for each of the power plant assets 11, 12, 13 by processing current and historical operational data (status data SD and/or measurement data MD) which are received from the monitoring unit 21. The determination of the models 51, 52, 53 is made by a trained data driven model, where current and historical operational data (status data SD and/or measurement data MD) are fed as a digital input to the trained data driven model and the trained data driven model provides the models 51, 52, 53 for each power plant asset 11, 12, 13 as a digital output.

The purpose of the training system 30 is to prepare the models 51, 52, 53 (i.e. the digital twins) and update them to the current state of the power plant 10. This is done by refreshing the models 51, 52, 53 with the latest operational data received from the monitoring unit 21. It trains the models 51, 52, 53 by parameterizing them to reflect the current state of the power plant assets 11, 12, 13.

In addition to receiving parameters from the training model 30, the power plant modelling system 50 receives forecast timeseries data from the forecasting system 40. The forecast timeseries data relates to power production influencing parameters, such as weather forecast WF, energy price forecast EPF, demand forecast DF. The forecasting system 40 contains databases or has remote access to a variety of forecasts, such as weather, energy price, demand, grid, and others.

The optimization system 70 determines the future control commands FCC and/or the second setpoints SP2 by processing the actual current state of the models 51, 52, 53 received from the power plant modelling system 50, thereby considering the objectives 71-75 which have to be met at the specific point in time being in future. This specific time point is, during processing the optimization, a future time point ahead of the present.

The objectives to be met during the optimization may be a minimum LCoE produced MLCoE, a maximum plant availability MPA, a maximum plant revenue MRVP, grid compliance GCC, and many more. In addition, the optimization system 70 may consider grid variables 61, 62, 63 of the grid 60, such as frequency FRQ, voltage VOL, demand DEM, and so on. The grid variables or parameters 61, 62, 63 may be additional constraints in the optimization system 70.

The optimization system 70 therefore aims to create an optimal control strategy for the power plant 10 and its power plant assets 11, 12, 13 based on the outcomes of the simulation done by the power plant modelling system 50. The optimization system 70 uses multi-objective optimization techniques which aim to find the best fitting operation the for the power plant 10, depending on current and simulated conditions. The power plant modelling system 50 and the optimization system 70 cooperate, i.e. the multi-objective optimizer uses the parameterized models 51, 52, 53 to perform the optimization.

As a result, the optimization system 70 creates the differential future control commands FCC and/or the second setpoint SP2 for each of the power plant assets 11, 12, 13.

While the power plant 10 and the power plant control system 20 are processing all information at a time point which is in the present (T = T_{N}), the components of the power plant emulating system, i.e., the training system 30, the forecasting system 40, the power plant modelling system 50, the optimization system 70 and the grid 60, process information for a future time point, i.e. T = T_{N} + T_{F}.

The future control commands FCC and, optionally, the second setpoint SP2 are stored in a database 80. As the second setpoint SP2 can be derived from the future control commands FCC, it is not necessary to store the second setpoint SP2 in the database necessarily. Storing the future control commands FCC and/or the second setpoints SP2 is done for a point in time, which corresponds to the future time point, i.e., T = T_{N} + T_{F}.

For improved controlling of the power plant 10, the real-time control unit 22 performs the following steps at each time point of one or more time points during the operation of the power plant 10. As known from conventional reactive controlling, actual status data SD and/or measurement data MD (i.e., operational data) are obtained from the monitoring unit 21 at the present time point T_{N}. Based on the operational data, the respective first setpoint SP1 is determined for each of the power plant assets 11, 12, 13 at the present time point T_{N}. In addition to that known reactive controlling, the emulated second setpoints SP2 are obtained for each of the power plant assets 11, 12, 13 at the present time point T_{N}, which have been emulated in the past for this specific present time point T_{N}. Finally, a respective actual setpoint ASP for each of the power plant assets 11, 12, 13 is determined from the associated first setpoints SP1 and second setpoints SP2. The respective actual setpoints ASP are then used for controlling the power plant assets 11, 12, 13.

Each actual setpoint ASP of the respective power plant asset 11, 12, 13 corresponds to its first setpoint SP1 or its second setpoint SP2 depending on the result of a verification process considering at least one operational constraint. Alternatively, the actual setpoint ASP of the respective power plant asset 11, 12, 13 corresponds to an adapted first setpoint SP1, wherein the adaption is based on the second setpoint SP2.

Instead of processing the second setpoints SP2, the future control commands FCC can be processed by the real-time control unit 22. As mentioned above, the second setpoints SP2 may be stored in the database 80 upon emulation and can be obtained from the real-time control unit 22 from the database 80 directly. Alternatively, if only the emulated future control commands FCC are not stored in the database 80 upon emulation, the second setpoint SP2 can be determined from the emulated future control commands FCC, either by a real-time control unit 22 or a processor of the power plant emulating system 30, 40, 50, 70.

While the power plant 10 and the power plant control system 20 are on site-components, the aforementioned components of the power plant emulating system, i.e., the training system 30, the forecasting system 40, the power plant modelling system 50 and the optimization system 70 may be implemented on one or more processors being remote from the power plant 10.

The method as described above will be explained using a concrete example in the following. In this example, the power plant 10 consists of a wind turbine and a battery. Assume that the battery participates in a frequency reserve market. Gathered during the present time point, i.e., T = T_{N}, the following assumptions are valid:
- an average wind speed leads to an average wind turbine generation;
- the energy produced by the wind turbine is exported to the electrical grid;
- the battery has a state of charge (SoC) corresponding to 40%;
- a time horizon equals to 15 minutes;
- the battery is planned for discharging by 20% for the next hour (i.e., 5% per time horizon);
- the minimum allowed state of charge of the battery equals 15%.

The monitoring unit 21 is monitoring the wind turbine and the battery and is gathering their operational data (status data SD and/or measurement data MD). This operational data is sent to the training system 30. The training system 30 refreshes the models of the power plant modelling system 50 with the new data it receives from the training system 30 in order to reflect the actual state of the power plant assets, i.e., the wind turbine and the battery. Hence, the models of the wind turbine and the battery are digital twins of the power plant 10, i.e., an exact model of the power plant 10. The power plant modelling system 50 comprising the models of the wind turbine and the battery will also receive forecasts from the forecasting system 40 for the next time horizon, i.e., the next 15 minutes.

Resulting from the forecasts provided by the forecasting system 40, the following assumptions are valid:
- the wind forecast WF shows wind dropping to speeds below production;
- the price forecast for energy shows high energy prices for the next time horizon;
- the model of the battery shows that at a current discharge rate, the battery will be at a state of charge of 60% at the start of the next time horizon.

The optimization system 70 will then simulate the future behavior of the power plant considering the digital model and the forecasts.

According to the model in the modelling system 50, the optimization system 70 will aim to take advantage of the high prices and discharge the battery to the electrical grid 70, especially since there is no wind. It will therefore prepare control parameters to instruct the battery to discharge. For example, the optimization system 70 calculates a 5% discharge over the next time horizon so that it remains within operational constraints. These future control parameters are delivered to the database 80 and the real-time controller 21, respectively, of the power plant control system 20.

The real-time control unit 21 reads the future control parameters FCC when the time horizon actually comes. The real-time controller 21 calculates from the future control parameters FCC that it should instruct the battery to discharge by an additional 5% over the next time horizon.

Note, if the power plant modelling system 50 containing the models of the power plant 10 is wrong and calculates a wrong discharge of, for example, 8% for the next time horizon, then the real-time controller 21 will ignore this parameter as it drives the system outside operational constraints and will cause the battery to miss its already existing commitment.

## Claims

1. A method for computer-implemented controlling a power plant (10) being connected to an electrical grid (60), the power plant (10) comprising:
- at least one power plant asset (11-13), each of the power plant assets (11-13) being an energy producer and/or an energy consumer;
- a power plant control system (20) for monitoring and controlling the at least one power plant asset (11-13) by respective control commands (CC) having a respective first setpoint (SP1), the power plant control system (20) comprising a monitoring unit (21) and a real-time control unit (22);
- a power plant emulating system (30, 40, 50, 70) being adapted to emulate future control commands (FCC) for each of the at least one power plant assets (11-13) at a future time point based on historical and/or forecasted conditions of the power plant (10) and/or external data, the emulated future control commands (FCC) having a respective second setpoint (SP2) ;
wherein the following steps are performed by the real-time control unit (22) at each time point (T) of one or more time points during the operation of the power plant (10):
a) obtaining actual status data (SD) and/or measurement data (MD) from the monitoring unit (21) at a present time point (T_{N}) ;
b) determining a respective first setpoint (SP1) for each of the at least one power plant assets (11-13) from the actual status data (SD) and/or measurement data (MD) at the present time point (T_{N});
c) obtaining the emulated second setpoints (SP2) for each of the at least one power plant assets (11-13) at the present time point (T_{N}), where the second setpoints (SP2) have been emulated in the past for the present time point (T_{N}) ;
d) determining a respective actual setpoint (ASP) for each of the at least one power plant assets (11-13) from the associated first setpoints (SP1) and second setpoints (SP2) .

2. The method according to claim 1, wherein the actual setpoint (ASP) of a respective power plant asset (11-13) corresponds to its first setpoint (SP1) or its second setpoint (SP2), depending on a result of a verification process considering at least one operational constraint.

3. The method according to claim 1 or 2, wherein the actual setpoint (ASP) of a respective power plant asset (11-13) corresponds to an adapted first setpoint (SP1), wherein the adaption is based on the second setpoint (SP2).

4. The method according to one of the preceding claims, wherein the power plant emulating system (30, 40, 50, 70) comprises a training system (30), a forecasting system (40), a power plant modelling system (50), and an optimization system (70).

5. The method according to claim 4, wherein the power plant modelling system (50) contains a model (51-53) for each power plant asset (11-13), where each of the models (51-53) is a direct digital representation of a respective power plant asset (11-13) and determines at each of the time points at least one parameter reflecting the actual current state of the at least one power plant asset (11-13).

6. The method according to claim 4 or 5, wherein the models of the power plant modelling system (50) are parameterized by the training system (30) to reflect at each of the time points the actual current state of the at least one power plant asset (11-13).

7. The method according to claim 5 or 6, wherein the actual current state comprises at least one of the following parameters: power production of each power plant asset (11-13) being an energy producer; state of each power plant asset (11-13); state of charge of each power plant asset (11-13) being an energy storage.

8. The method according to one of the preceding claims 4 to 7, wherein the training system (30) determines the models (51-53) for each power plant asset (11-13) by processing current and historical status data (SD) and/or measurement data (MD) received from the monitoring unit (21) by a trained data driven model, where the current and historical status data (SD) and/or measurement data (MD) are fed as a digital input to the trained data driven model and the trained data driven model provides the models (51-53) for each power plant asset (11-13) as a digital output.

9. The method according to one of the preceding claims 4 to 8, wherein the power plant modelling system (50) receives forecast time series data from the forecasting system (40) relating to at least one power production influencing parameter (WF, EPF, DF).

10. The method according to one of the preceding claims 4 to 9, wherein the optimization system (70) determines the future control commands (FCC) and/or the second setpoints (SP2) by processing the actual current state of the models (51-53) of the at least one power plant asset (11-13) received from the power plant modelling system (50) and at least one objective (71-75) to be met at the present time point being a future time point ahead of the present.

11. The method according to claim 10, wherein the at least one objective (71-75) to be met comprises at least one of the following objectives: minimum leveraged cost of produced energy (MLCoE); maximum availability of the power plant (MPA); maximum revenue of the power plant (MRVP); grid code compliance (GCC).

12. The method according to one of the preceding claims, wherein the second setpoints (SP2) are stored in a database (80) upon emulation and obtained from the real-time control unit (22) from the database (80).

13. The method according to one of the preceding claims, wherein the emulated future control commands (FCC) are stored in a database upon emulation, and wherein the second setpoints (SP2) are determined from the emulated future control commands (FCC), either by the real-time control unit (22) or the power plant emulating system (30, 40, 50, 70).

14. The method according to one of the preceding claims, wherein the emulated second setpoints (SP2) are determined from respective emulated status data and/or emulated measurement data by the optimization system (70) which is adapted to create an optimal control strategy for the power plant (10) based on a simulation model and at least one objective of the optimization.

15. An apparatus for computer-implemented controlling a power plant (10) being connected to an electrical grid (60), the power plant (10) comprising:
- at least one power plant asset (11-13), each of the power plant assets (11-13) being an energy producer and/or an energy consumer;
- a power plant control system (20) for monitoring and controlling the at least one power plant asset (11-13) by respective control commands (CC) having a respective first setpoint (SP1), the power plant control system (20) comprising a monitoring unit (21) and a real-time control unit (22);
- a power plant emulating system (30, 40, 50, 70) being adapted to emulate future control commands (FCC) for each of the at least one power plant assets (11-13) at a future time point based on historical and/or forecasted conditions of the power plant (10) and/or external data, the emulated future control commands (FCC) having a respective second setpoint (SP2);
wherein the apparatus comprises a processor configured to perform at each time point of one or more time points during the operation of the power plant (10) the following steps:
a) obtaining actual status data (SD) and/or measurement data (MD) from the monitoring unit (21) at a present time point (T_{N}) ;
b) determining a respective first setpoint (SP1) for each of the at least one power plant assets (11-13) from the actual status data (SD) and/or measurement data (MD) at the present time point (T_{N});
c) obtaining the emulated second setpoints (SP2) for each of the at least one power plant assets (11-13) at the present time point (T_{N}), where the second setpoints (SP2) have been emulated in the past for the present time point (T_{N}) ;
d) determining a respective actual setpoint (ASP) for each of the at least one power plant assets (11-13) from the associated first setpoints (SP1) and second setpoints (SP2) .

16. A power plant comprising at least one power plant asset (11-13), wherein the power plant (10) comprises an apparatus according to claim 15.

17. A computer program product with program code, which is stored on a non-transitory machine-readable carrier, for carrying out a method according to one of claims 1 to 14 when the program code is executed on a computer.
